# EUROPÄISCHE PATENTSCHRIFT

(11) **EP 3 740 787 B1**
(45) Veröffentlichungstag und Bekanntmachung des Hinweises auf die Patenterteilung: **16.08.2023**
(21) Anmeldenummer: 19701057.2
(22) Anmeldetag: 15.01.2019
(51) Int. Cl.: G01S 7/4912, G01S 7/4911, G01S 7/4915, G01S 17/34, G01S 17/58, G01S 7/491

(54) **SENSORVORRICHTUNG**
SENSOR DEVICE
DISPOSITIF DE DÉTECTION

(30) Priorität: 16.01.2018 DE 102018200618
(43) Veröffentlichungstag der Anmeldung: 25.11.2020
(73) Patentinhaber: Robert Bosch GmbH, 70442 Stuttgart (DE)
(72) Erfinder: KERN, Oliver, 71272 Renningen (DE); BROSCHE, Thomas, 71229 Leonberg (DE)
(86) Internationale Anmeldenummer: PCT/EP2019/050855
(87) Internationale Veröffentlichungsnummer: WO 2019/141642

(56) Entgegenhaltungen:
- US-A- 4 846 571
- WANG FEIYU ET AL: "Prior knowledge aided super-resolution line spectral estimation: an iterative reweighted algorithm", 2017 IEEE INTERNATIONAL CONFERENCE ON ACOUSTICS, SPEECH AND SIGNAL PROCESSING (ICASSP), IEEE, 5. März 2017 (2017-03-05), Seiten 3296-3300, XP033259022, DOI: 10.1109/ICASSP.2017.7952766 [gefunden am 2017-06-16]
- FANG JUN ET AL: "Super-Resolution Compressed Sensing for Line Spectral Estimation: An Iterative Reweighted Approach", IEEE TRANSACTIONS ON SIGNAL PROCESSING, IEEE SERVICE CENTER, NEW YORK, NY, US, Bd. 64, Nr. 18, 15. September 2016 (2016-09-15), Seiten 4649-4662, XP011617930, ISSN: 1053-587X, DOI: 10.1109/TSP.2016.2572041 [gefunden am 2016-07-25]

## Beschreibung

### Technisches Gebiet

Die Erfindung betrifft eine Sensorvorrichtung zur Bestimmung einer Entfernung und/oder Geschwindigkeit Objekts gemäß des Oberbegriffes von Anspruch 1. eines

Die Erfindung betrifft weiter ein Verfahren zur Bestimmung einer Entfernung und/oder Geschwindigkeit Objekts gemäß des Oberbegriffes von Anspruch 5. eines

Obwohl die vorliegende Erfindung auf beliebige Sendeeinrichtungen und Empfangseinrichtungen anwendbar ist, wird die vorliegende Erfindung im Zusammenhang mit Lichtdetektions- und Abstandssystemen - Lidar - beschrieben.

### Stand der Technik

Bekannte Lidar-Systeme nutzen schmalbandige Laserstrahlen, die in eine bestimmte Richtung abgelenkt werden. Trifft der Laserstrahl auf ein Objekt kann anhand der Reflexion des Laserstrahls an dem Objekt in diesem Winkel dessen Entfernung bestimmt werden. Hierzu wird beispielsweise eine lineare Frequenzrampe, basierend auf dem Prinzip FMCW - frequency modulated continuous wave radar - ausgesendet und durch einen kohärenten Empfang die Differenzfrequenz zwischen Senderampe und Empfangsrampe ermittelt. Anhand dieser Differenzfrequenz kann dann die Entfernung des Objekts bestimmt werden. Um ein Objekt in einem Gebiet detektieren zu können, kann ein Gebiet zweidimensional ausgeleuchtet werden. Hierfür ist eine kurze Messzeit erforderlich, was üblicherweise allerdings die Reichweite, also die Entfernung in der ein Objekt detektiert werden kann, reduziert. Ursache hierfür ist, dass bei größer werdender Entfernung das Signal-zu-Rausch Verhältnis für eine bestimmte Entfernung linear von der Messzeit abhängt und bei größer werdender Messzeit eine Detektion und somit eine Messung dann nicht mehr möglich ist.

Bei kohärenten Lidar-Systemen ist die Dopplerfrequenz aufgrund der geringen Wellenlänge von Licht vergleichsweise hoch. Hierdurch ist eine eindeutige Messung der Dopplerfrequenz schwierig, da hierfür ein sehr geringer zeitlicher Rampenabstand und somit eine sehr geringe Rampendauer erforderlich ist.

### Offenbarung der Erfindung

In einer Ausführungsform stellt die Erfindung eine Sensorvorrichtung zur Bestimmung einer Entfernung und/oder Geschwindigkeit eines Objekts bereit, umfassend eine Sendeeinrichtung zum Aussenden von Licht zumindest einer Frequenz auf das Objekt, wobei die Sendeinrichtung ausgebildet ist, Licht in zumindest einen Winkelbereich abzustrahlen, wobei das Licht in dem zumindest einen Winkelbereich im Wesentlichen gleichzeitig mit Frequenzen zeitabhängig in unterschiedlichen Frequenzbereichen variiert wird, eine Empfangseinrichtung zum Empfangen von vom Objekt reflektierten Lichts, wobei die Empfangseinrichtung ausgebildet ist, das empfangene Licht im jeweiligen Frequenzbereich zu zumindest zwei Zeitpunkten abzutasten und eine Auswerteeinrichtung, die ausgebildet ist, anhand des ausgesendeten Lichts und der abgetasteten Zeitpunkte des empfangenen Lichts, die Entfernung und/oder die Geschwindigkeit des Objekts zu bestimmen, wobei die Sendeeinrichtung eine Lichtquelle und eine Modulationseinrichtung zur Erzeugung der zeitabhängigen Variation von Frequenzen aufweist, wobei die Modulationseinrichtung für jeden Frequenzbereich einen unterschiedlichen akusto-optischen Modulator umfasst|.

In einer weiteren Ausführungsform stellt die Erfindung ein Verfahren zur Bestimmung einer Entfernung und/oder Geschwindigkeit eines, mittels einer Sensorvorrichtung gemäß Anspruch 1 Objekts bereit, umfassend die Schritte
- Aussenden von Licht in zumindest einen Winkelbereich mittels der Sendeeinrichtung mit zumindest einer Frequenz auf das Objekt, wobei das Licht im Wesentlichen gleichzeitig mit Frequenzen zeitabhängig in unterschiedlichen Frequenzbereichen jeweils durch den jeweiligen akusto-optischen Modulator variiert wird,
- Empfangen von vom Objekt reflektierten Lichts mittels einer Empfangseinrichtung,
- Abtasten des empfangenen Lichts im jeweiligen Frequenzbereich zu zumindest zwei Zeitpunkten,
- Bestimmen der Entfernung und/oder Geschwindigkeit des Objekts anhand des ausgesendeten Lichts und der abgetasteten Zeitpunkte des empfangenen Lichts.

Einer der damit erzielten Vorteile ist, dass eine eindeutige Messung der (Ziel)Entfernung, also des Abstandes und der Radialkomponente der (Relativ)Geschwindigkeit eines Objekts innerhalb nur einer Rampendauer ermöglicht wird. Dabei wird die Rampendauer insbesondere nicht mehr durch die Eindeutigkeit der Dopplerfrequenz beschränkt. Ein weiterer Vorteil ist, dass Mehrdeutigkeiten verhindert werden. Ebenso wird die Flexibilität erhöht, da die Entfernung unabhängig von der Geschwindigkeit des Objekts gemessen werden kann.

Weitere Merkmale, Vorteile und weitere Ausführungsformen der Erfindung sind im Folgenden beschrieben oder werden dadurch offenbar:
Gemäß einer vorteilhaften Weiterbildung ist die Sendevorrichtung ausgebildet, die Frequenz in dem jeweiligen Winkelbereich zeitlich linear zu variieren, vorzugsweise von einer Startfrequenz zu einer Endfrequenz zu erhöhen. Einer der damit erzielten Vorteile ist, dass eine einfache zeitliche Variation der Frequenz über den gesamten Frequenzbereich ermöglicht wird. Darüber hinaus wird auch eine spätere Auswertung vereinfacht, da eine eindeutige zeitliche Zuordnung der Frequenzen ermöglicht wird.

Erfindungsgemäß weist die Sendeeinrichtung eine Lichtquelle und eine Modulationseinrichtung zur Erzeugung der zeitabhängigen Variation von Frequenzen des Lichts der Lichtquelle auf. Mittels einer Modulationseinrichtung ist eine einfache und gleichzeitig zuverlässige Modulation des Lichts einer Lichtquelle, beispielsweise eines Lasers, möglich.

Erfindungsgemäß umfasst die Modulationseinrichtung für jeden der unterschiedlichen Frequenzbereiche einen unterschiedlichen akusto-optischen Modulator. Dies ermöglicht eine besonders zuverlässige Modulation.

Gemäß einer weiteren vorteilhaften Weiterbildung weist die Modulationseinrichtung einen Modulator zur zeitlichen Variation eines Frequenzbereichs und zumindest einen weiteren Modulator zur Erzeugung unterschiedlicher Frequenzbereiche auf. Einer der damit erzielten Vorteile ist, dass durch die Trennung von Frequenzbereichen und deren jeweiliger zeitlicher Variation eine besonders zuverlässige Variation von Frequenzen in unterschiedlichen Frequenzbereichen bereitgestellt werden kann. Beispielsweise lässt sich ein Frequenz-Offset zwischen den verschiedenen Bereichen mittels eines Phasenmodulators erzeugen. Hierbei wird die Phase zeitlich veränderlich moduliert und dadurch ein Frequenz-Offset erzeugt. Beispiele für solche Modulatoren sind solche, die auf der Modulation der Ladungsträgerdichte basieren oder auf Basis elektro-optischer Effekte, wie beispielsweise Pockels-Effekt oder den Kerr-Effekt.

Gemäß einer weiteren vorteilhaften Weiterbildung umfasst die Sendeeinrichtung eine Scaneinrichtung zum Aussenden des Lichts in unterschiedliche Winkelbereiche. Mittels einer Scan Einrichtung, d. h. einer zusätzlichen scannenden Einheit können sequenziell bestimmte Winkelbereiche mit Licht bestrahlt werden.

Gemäß einer weiteren vorteilhaften Weiterbildung werden die abgetasteten Zeitpunkte mit gleichem zeitlichen Abstand gewählt. Auf diese Weise kann eine einfache zeitliche Abtastung erfolgen. So kann beispielsweise, wenn eine 2-dimensionale Frequenzschätzung vorgenommen wird, bei einem vollständig äquidistanten Abtastgitter die Frequenzschätzung auch in jeweils eindimensionale Frequenzschätzungen entlang jeder der zwei Dimensionen aufgeteilt werden.

Gemäß einer weiteren vorteilhaften Weiterbildung erfolgt das Bestimmen der Entfernung und/oder der Geschwindigkeit des Objekts anhand einer zweidimensionalen Fourier-Transformation und einer Frequenzschätzung. Einer der damit erzielten Vorteile ist, dass damit auf zuverlässige Weise der Abstand und zumindest die Radialkomponente der Geschwindigkeit für das Objekt bestimmt werden.

Gemäß einer weiteren vorteilhaften Weiterbildung werden die abgetasteten Zeitpunkte mit nicht-äquidistantem zeitlichen Abstand gewählt und/oder die Frequenzabstände zwischen zumindest zwei Frequenzbereichen werden unterschiedlich gewählt und die Frequenzschätzung erfolgt mittels eines Compressed-Sensing-Verfahrens unter Berücksichtigung des entfernungsbedingten Frequenzanteils in einer Dopplerfrequenz.

Auf diese Weise lässt sich die Entfernung und/oder Geschwindigkeit eines Objekts auch bei zeitlich nicht-äquidistanten Abtastpunkten und/oder nicht äquidistanten Frequenzabständen zwischen gleichzeitig gesendeten Rampen zuverlässig bestimmen. Compressed-Sensing Verfahren sind beispielsweise aus der Nichtpatentliteratur von Feiyu Wang et al. "Prior knowledge aided super-resolution line spectral estimation: an iterative reweighted algorithm." Acoustics Speech and Signal Processing (ICASP), 2017 IEEE International Conference on. IEEE, 2017, oder von Jun Fang, et al., "Super-Resolution Compressed Sensing for Line Spectral Estimation: An Iterative Reweighted Approach", IEEE Trans. on Signal Processing, Vol. 64, No. 18, Sept. 15, 2016 bekannt geworden. Neben den Compressed-Sensing Verfahren sind auch andere, für die nicht-äquidistante Abtastung geeignete Verfahren anwendbar.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

- Fig. 1: zeigt eine Zeit-Frequenzdarstellung der zeitlichen Variation von Frequenzen nach einem Verfahren gemäß einer Ausführungsform der vorliegenden Erfindung;
- Fig. 2a, 2b: zeigen ein zweidimensionales Entfernung-Beatfrequenz-Spektrum nach einem Verfahren gemäß einer Ausführungsform der vorliegenden Erfindung;
- Fig. 3: zeigt einen Teil einer Sensorvorrichtung gemäß einer Ausführungsform der vorliegenden Erfindung; und
- Fig. 4: zeigt eine Sensorvorrichtung gemäß einer Ausführungsform der vorliegenden Erfindung.

### Ausführungsformen der Erfindung

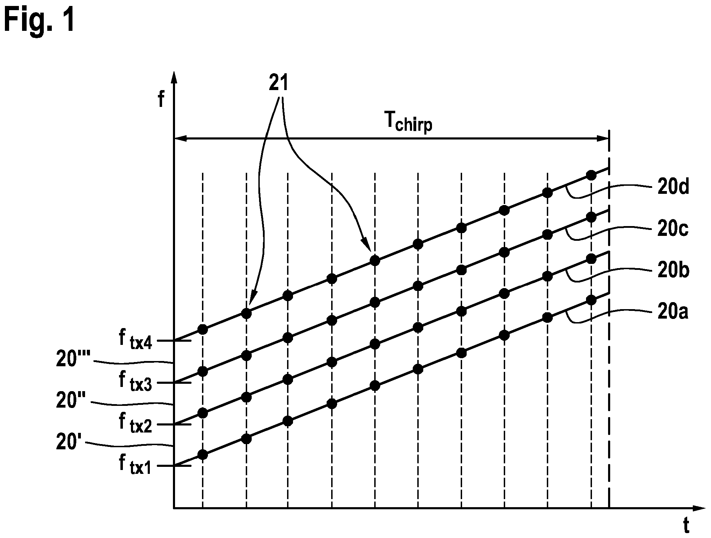

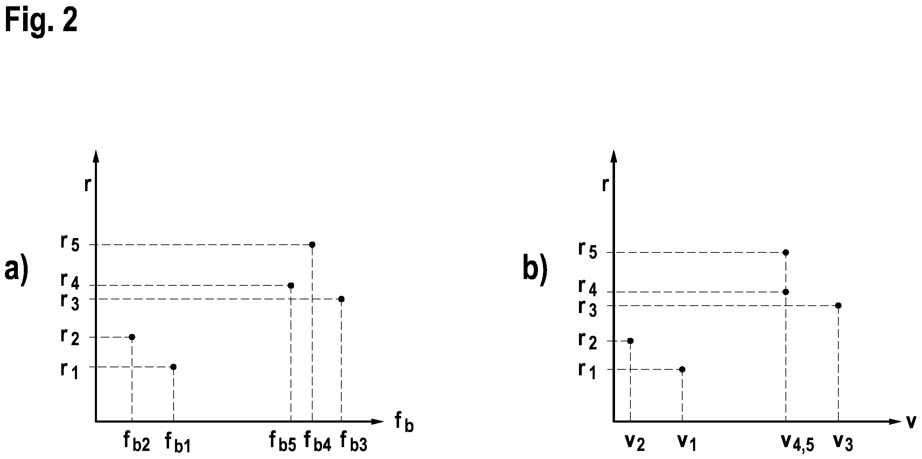

Figur 1 zeigt eine Zeit-Frequenzdarstellung der zeitlichen Variation von Frequenzen nach einem Verfahren gemäß einer Ausführungsform der vorliegenden Erfindung und die Figur 2a, 2b zeigen ein zweidimensionales Entfernung-Beatfrequenz-Spektrum nach einem Verfahren gemäß einer Ausführungsform der vorliegenden Erfindung.

In Figur 1 ist ein Frequency Division Multiplexing - kurz FDM - Modulationsverfahren mit vier simultanen äquidistant verschobenen Frequenzrampen 20a, 20b, 20c, 20d gezeigt. In Figur 2a, 2b ist ein Schema für eine exemplarische Verteilung der Peaks in einem zweidimensionalen Entfernung-Beatfrequenz-Bereichs-Spektrum gezeigt.

Im Detail zeigt Figur 1 eine Zeitfrequenzdarstellung, wobei die Frequenz f über der Zeit t aufgetragen ist. Zu sehen sind vier Frequenzrampen 20a, 20b, 20c, 20d, die jeweils mit der gleichen Steigung im gleichen Zeitintervall Tchirp ansteigen. Die Frequenzrampen 20a, 20b, 20c, 20d unterscheiden sich dabei in ihrer jeweiligen Startfrequenz um die jeweils gleiche Frequenzdifferenz 20', 20", 20‴. Die Frequenzdifferenzen 20', 20", 20‴ können dabei gleich oder unterschiedlich sein. Die Startfrequenz der ersten Rampe 20a ist in Figur 1 am kleinsten und die Startfrequenz der vierten Frequenzrampe 20d am größten. Durch den linearen Anstieg ist die jeweilige Endfrequenz der jeweiligen Frequenzrampe 20a, 20b, 20c, 20d höher als die jeweilige Startfrequenz fₜₓ₁, fₜₓ₂, fₜₓ₃, fₜₓ₄. Selbstverständlich sind auch umgekehrte Frequenzrampen denkbar, bzw. eine linear fallende Frequenzrampe. In Figur 1 sind vier Frequenzrampen 20a, 20b, 20c, 20d zu sehen, es ist aber auch jede andere Anzahl an Frequenzrampen auch möglich, beispielsweise 1024.

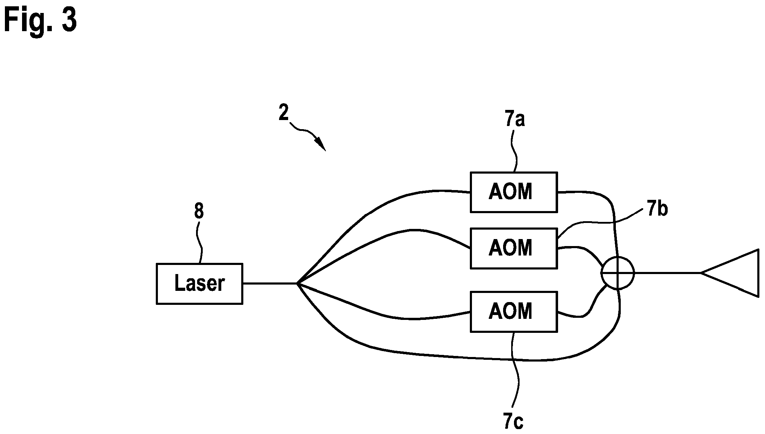

Die Erzeugung der Frequenzrampen 20a, 20b, 20c, 20d kann dabei auf folgende Weise erfolgen: Licht von einer Lichtquelle, beispielsweise eines Lasers wird mittels dreier verschiedener akusto-optischen Phasenmodulatoren 7a, 7b, 7c (siehe Fig. 3) erzeugt und so neben der nicht modulierten Frequenzrampe 20a die drei linearen Frequenzrampen 20b, 20c, 20d moduliert. Die vier Frequenzrampen 20a, 20b, 20c, 20d unterscheiden sich durch ihre Startfrequenzen fₜₓ₁, fₜₓ₂, fₜₓ₃, fₜₓ₄, wobei fₜₓ₂=fₜₓ₁+Δf, fₜₓ₃=fₜₓ₂+Δf, usw. ist. Die Offsetfrequenzen 20', 20", 20‴ zwischen den verschiedenen Startfrequenzen fₜₓ₁, fₜₓ₂, fₜₓ₃, fₜₓ₄ müssen nicht zwingend größer als der Frequenzhub, also der Differenz zwischen Start- und Endfrequenz der jeweiligen Frequenzrampe 20a, 20b, 20c, 20d sein. Die Frequenzrampen fₜₓ₁, fₜₓ₂, fₜₓ₃, fₜₓ₄ können beim Empfang in ein jeweiliges Basisband gemischt werden, auch bekannt als sogenanntes "Dechirping". Die Modulation wird dabei entfernt und die Frequenzrampen 20a, 20b, 20c, 20d getrennt.

In den hier beschriebenen Ausführungsformen der Erfindung wird die genannte FDM-Modulation für die eindeutige Bestimmung der Entfernungen eingesetzt. Der maximale Rampenabstand 20', 20", 20‴ bei konstantem Δf (äquidistant) ist dabei abhängig von der maximal eindeutig messbaren Entfernung rₘₐₓ. Bei z. B. rₘₐₓ = 300 m ergibt sich ein maximaler Rampenabstand 20', 20", 20‴ von Δf = 500 kHz.

Dazu werden die einzelnen Rampen 20a, 20b, 20c, 20d demoduliert, abgetastet und nachfolgend durch eine 2-dimensionale Fourier-Transformation in den Entfernungs-Beatfrequenz-Bereich transformiert. Die Demodulation kann alternativ auch im digitalen Bereich nach der Abtastung erfolgen. Nach der Abtastung und Demodulation erfolgt eine Kompensation des Anteils der Entfernung in der Beatfrequenz, die Detektion der den Zielen zugeordneten Peaks und die Schätzung der Peakposition (siehe Fig. 2b), d. h. des Zielabstands, also der Entfernung r und der Radialkomponente der (Relativ)geschwindigkeit v für jedes relevante Ziel. Die letzteren Schritte entsprechen einer 2-dimensionalen Frequenzschätzung, die bei einem äquidistanten Abtastgitter auch in zwei eindimensionale Frequenzschätzungen aufgeteilt werden kann.

Die Verteilung der Abtastpunkte kann alternativ auch nicht äquidistant sein. In diesem Fall kann die 2-dimensionale Fourier Transformation und Schätzung der Peakposition (Frequenzschätzung) z.B. durch bekannte Compressed-Sensing Verfahren realisiert werden.

Die Detektion und Schätzung der Peakposition kann alternativ auch im Entfernungs-Beatfrequenzspektrum (siehe Fig. 2a) durchgeführt werden. Die Schätzung der Geschwindigkeiten erfolgt dann anhand der Dopplerfrequenz nach Abzug des entfernungsbedingten Frequenzanteils in der Beatfrequenz.

Figur 3 zeigt einen Teil einer Sensorvorrichtung gemäß einer Ausführungsform der vorliegenden Erfindung.

Im Detail zeigt Fig. 3 eine mögliche Realisierung der frequenzverschobenen Rampen mittels mehrerer Akusto-Optischer-Modulatoren 7a, 7b, 7c. Weitere abweichende Realisierungsvarianten der Hardware, z. B. ein Einsatz von 4 AOM in jedem Sendezweig oder eine andere Frequenzmodulation sind möglich. Ein AOM 7a, 7b, 7c kann verwendet werden, um ein Lichtsignal in der Frequenz, also Farbe, zu verschieben. Ein Laserstrahl wird frequenzmoduliert. Dies kann nach bereits bekannten Methoden entweder direkt, zum Beispiel durch Ändern des Laserstroms erfolgen oder wie hier dargestellt, extern durch Nachschalten eines optischen Phasenmodulators 7a, 7b, 7c erfolgen, so dass eine oben beschriebene lineare Frequenzrampe entsteht. Dieses modulierte Lichtsignal wird dann auf beispielsweise vier Pfade aufgeteilt. Hier ist beispielhaft in drei der Pfade ein AOM 7a, 7b, 7c eingebracht, wobei jeder der AOMs 7a, 7b, 7c die geforderte Frequenzdifferenz zwischen den Rampen 20a, 20b, 20c, 20d erzeugt. Für obiges Beispiel müsste einer der AOMs 7a, 7b, 7c eine Verschiebung um 500 kHz realisieren, ein zweiter eine Verschiebung um 1 MHz und der dritte eine Verschiebung um 1.5 MHz. Die so erzeugten Signale über dieselbe Ausgangs-Optik 12 in die Umgebung gesendet. Die Verwendung einer zusätzlichen scannenden Einheit 9 um sequentiell in bestimmte Winkelbereiche 10, 11 zu strahlen ist optional möglich.

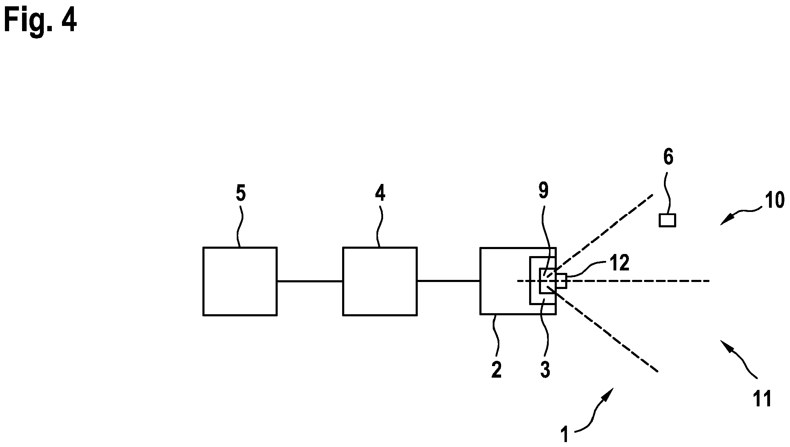

Figur 4 zeigt eine Sensorvorrichtung gemäß einer Ausführungsform der vorliegenden Erfindung.

Im Detail ist in Figur 4 eine Sensorvorrichtung 1 gezeigt. Die Sensorvorrichtung 1 umfasst eine Sendeeinrichtung 2, die mit einer Scaneinrichtung 9 zur Bestrahlung von verschiedenen Winkelbereichen 10, 11 versehen ist. Des Weiteren umfasst die Sendeeinrichtung 2 eine Aussende-Optik 12. Mittels der Sendeeinrichtung 2 würde ein Objekt 6 in dem Winkelbereich 10 bestrahlt werden. Das von dem Objekt 6 reflektierte Licht wird mittels einer Empfangseinrichtung 3 der Sensorvorrichtung 1 empfangen und einer Auswerteeinrichtung 4 zur Ermittlung der Entfernung und/oder Geschwindigkeit des Objekts 6 zugeführt. Mittels einer Ausgabeeinrichtung 5 kann dann die Entfernung und/oder die Geschwindigkeit des Objekts 6 ausgegeben werden, beispielsweise an eine Steuereinrichtung eines Kraftfahrzeugs oder dergleichen zur weiteren Verarbeitung weitergeleitet werden.

Zusammenfassend weist die vorliegende Erfindung, insbesondere zumindest eine der Ausführungsformen zumindest einen der folgenden Vorteile auf:
- Eindeutige Messung der Entfernung eines Objekts und Geschwindigkeit bei einem FMCW-System innerhalb nur einer Rampendauer
- keine Beschränkung der Rampendauer
- Verwendung von verschiedenen Rampensteigungen möglich
- Verwendung von verschiedenen Rampen-Frequenzabständen möglich
- Entfernung kann unabhängig von der Geschwindigkeit gemessen werden
- längere Rampendauern mit geringeren Abtastfrequenzen

Obwohl die vorliegende Erfindung anhand bevorzugter Ausführungsbeispiele beschrieben wurde, ist sie nicht darauf beschränkt, sondern auf vielfältige Weise modifizierbar.

Insbesondere kann die Erfindung nicht nur für Lidar-Systeme sondern auch für Radar und Solarsysteme, Ultraschallsensorik, et cetera verwendet werden.

## Patentansprüche

1. Sensorvorrichtung (1) zur Bestimmung einer Entfernung und/oder Geschwindigkeit eines Objekts (6), umfassend
eine Sendeeinrichtung (2) zum Aussenden von Licht zumindest einer Frequenz auf das Objekt (6), wobei die Sendeeinrichtung (2) ausgebildet ist, Licht in zumindest einen Winkelbereich (10, 11) abzustrahlen, wobei das Licht in dem zumindest einen Winkelbereich (10, 11) im Wesentlichen gleichzeitig mit Frequenzen zeitabhängig in unterschiedlichen Frequenzbereichen variiert wird,
eine Empfangseinrichtung (3) zum Empfangen von vom Objekt (6) reflektierten Lichts, wobei die Empfangseinrichtung (3) ausgebildet ist, das empfangene Licht im jeweiligen Frequenzbereich zu zumindest zwei Zeitpunkten (21) abzutasten und eine Auswerteeinrichtung (4), die ausgebildet ist, anhand des ausgesendeten Lichts und der abgetasteten Zeitpunkte des empfangenen Lichts, die Entfernung und/oder die Geschwindigkeit des Objekts (6) zu bestimmen, wobei die Sendeeinrichtung (2) eine Lichtquelle (8) und eine Modulationseinrichtung (7a, 7b, 7c) zur Erzeugung der zeitabhängigen Variation von Frequenzen aufweist,
**dadurch gekennzeichnet, dass** die Modulationseinrichtung (7a, 7b, 7c) für jeden Frequenzbereich einen unterschiedlichen
akusto-optischen Modulator (7a, 7b, 7c) umfasst.

2. Sensorvorrichtung gemäß Anspruch 1, wobei die Sendeeinrichtung (2) ausgebildet ist, die Frequenz in dem jeweiligen Winkelbereich linear zu variieren, vorzugsweise von einer Startfrequenz zu einer Endfrequenz zu erhöhen.

3. Sensorvorrichtung gemäß Anspruch 1 oder 2, wobei die Modulationseinrichtung (7a, 7b, 7c) einen Modulator zur zeitlichen Variation eines Frequenzbereichs und zumindest einen weiteren Modulator zur Erzeugung unterschiedlicher Frequenzbereiche aufweist.

4. Sensorvorrichtung gemäß einem der Ansprüche 1 bis 3, wobei die Sendeeinrichtung (2) Scaneinrichtung (9) umfasst zum Aussenden des Lichts in unterschiedliche Winkelbereiche umfasst.

5. Verfahren zur Bestimmung einer Entfernung und/oder Geschwindigkeit eines Objekts mittels einer Sensorvorrichtung gemäß einem der Ansprüche 1 bis 4 , umfassend die Schritte
- Aussenden von Licht in zumindest einen Winkelbereich (10, 11) mittels der Sendeeinrichtung (2) mit zumindest einer Frequenz auf das Objekt (6), wobei das Licht im Wesentlichen gleichzeitig mit Frequenzen zeitabhängig in unterschiedlichen Frequenzbereichen (20a, 20b, 20c, 20d) jeweils durch den jeweiligen akusto-optischen Modulator variiert wird,
- Empfangen von vom Objekt (6) reflektierten Lichts mittels einer Empfangseinrichtung (3)
- Abtasten des empfangenen Lichts im jeweiligen Frequenzbereich (20a, 20b, 20c, 20d) zu zumindest zwei Zeitpunkten (21),
- Bestimmen der Entfernung und/oder Geschwindigkeit des Objekts (6) anhand des ausgesendeten Lichts und der abgetasteten Zeitpunkte (21) des empfangenen Lichts.

6. Verfahren gemäß Anspruch 5, wobei die abgetasteten Zeitpunkte (21) mit gleichem zeitlichen Abstand gewählt werden.

7. Verfahren gemäß einem der Ansprüche 5 oder 6, wobei das Bestimmen der Entfernung und/oder der Geschwindigkeit des Objekts (6) anhand einer zweidimensionalen Fouriertransformation und einer Frequenzschätzung erfolgt.

8. Verfahren gemäß Anspruch 7, wobei die abgetasteten Zeitpunkte (21) mit nicht-äquidistantem zeitlichen Abstand gewählt werden und/oder die Frequenzabstände zwischen zumindest zwei Frequenzbereichen (20a, 20b, 20c, 20d) unterschiedlich gewählt werden und die Frequenzschätzung mittels eines Compressed-Sensing-Verfahrens unter Berücksichtigung des entfernungsbedingten Frequenzanteils in einer Dopplerfrequenz erfolgt.

## Claims

1. Sensor apparatus (1) for determining a distance and/or speed of an object (6), comprising a transmitter device (2) for transmitting light at at least one frequency to the object (6), with the transmitter device (2) being designed to emit light in at least one angular range (10, 11), with the light in the at least one angular range (10, 11) being time-dependently varied substantially simultaneously with frequencies in different frequency ranges,
a receiver device (3) for receiving light reflected by the object (6), with the receiver device (3) being designed to scan the received light in the respective frequency range at at least two times (21), and
an evaluation device (4) designed to determine the distance and/or the speed of the object (6) on the basis of the transmitted light and the scanned times of the received light, with the transmitter device (2) comprising a light source (8) and a modulation device (7a, 7b, 7c) for producing the time-dependent variation of frequencies,
**characterized in that** the modulation device (7a, 7b, 7c) comprises a different acousto-optic modulator (7a, 7b, 7c) for each frequency range.

2. Sensor apparatus according to Claim 1, wherein the transmitter device (2) is designed to linearly vary the frequency in the respective angular range, preferably increase the said frequency from a start frequency to an end frequency.

3. Sensor apparatus according to Claim 1 or 2, wherein the modulation device (7a, 7b, 7c) comprises a modulator for the time variation of a frequency range and at least one further modulator for producing different frequency ranges.

4. Sensor apparatus according to any of Claims 1 to 3, wherein the transmitter device (2) comprises a scanning device (9) for transmitting the light into different angular ranges.

5. Method for determining a distance and/or speed of an object by means of a sensor apparatus according to any of Claims 1 to 4, comprising the steps of:
- transmitting light into at least one angular range (10, 11) and onto the object (6) by means of the transmitter device (2) at at least one frequency, with the light being time-dependently varied substantially simultaneously with frequencies in different frequency ranges (20a, 20b, 20c, 20d), in each case by the respective acousto-optic modulator,
- receiving light reflected by the object (6) by means of a receiver device (3),
- scanning the received light in the respective frequency range (20a, 20b, 20c, 20d) at at least two times (21),
- determining the distance and/or speed of the object (6) on the basis of the transmitted light and the scanned times (21) of the received light.

6. Method according to Claim 5, wherein the scanned times (21) are chosen with an equal temporal spacing.

7. Method according to any of Claims 5 and 6, wherein the distance and/or the speed of the object (6) is determined on the basis of a two-dimensional Fourier transform and a frequency estimate.

8. Method according to Claim 7, wherein the scanned times (21) are chosen with a non-equidistant temporal spacing and/or the frequency spacings between at least two frequency ranges (20a, 20b, 20c, 20d) are chosen to be different and the frequency estimate is implemented by means of a compressed sensing method taking account of the distance-related frequency component in a Doppler frequency.

## Revendications

1. Dispositif de détection (1) destiné à déterminer une distance et/ou une vitesse d'un objet (6), le dispositif de détection comprenant
un module d'émission (2) destiné à émettre de la lumière d'au moins une fréquence sur l'objet (6), le module d'émission (2) étant conçu pour émettre de la lumière dans au moins une plage angulaire (10, 11), une variation de la lumière dans l'au moins une plage angulaire (10, 11) étant effectuée sensiblement simultanément à des fréquences dans différentes plages de fréquences en fonction du temps,
un module de réception (3) destiné à recevoir de la lumière réfléchie par l'objet (6), le module de réception (3) étant conçu pour analyser la lumière reçue dans la plage de fréquences respective à au moins deux instants (21) et
un module d'évaluation (4) qui est conçu pour déterminer la distance et/ou la vitesse de l'objet (6) à partir de la lumière émise et des instants d'analyse de la lumière reçue, le module d'émission (2) comportant une source de lumière (8) et un module de modulation (7a, 7b, 7c) destiné à faire varier des fréquences dans le temps,
**caractérisé en ce que** le module de modulation (7a, 7b, 7c) comprend un modulateur acousto-optique (7a, 7b, 7c) différent pour chaque plage de fréquences.

2. Dispositif de détection selon la revendication 1, le module d'émission (2) étant conçu pour faire varier la fréquence linéairement dans la plage angulaire respective, de préférence pour l'augmenter d'une fréquence initiale à une fréquence finale.

3. Dispositif de détection selon la revendication 1 ou 2, le module de modulation (7a, 7b, 7c) comportant un modulateur destiné à faire varier une plage de fréquences dans le temps et au moins un autre modulateur destiné à générer différentes plages de fréquences.

4. Dispositif de détection selon l'une des revendications 1 à 3, le module d'émission (2) comprenant un module de balayage (9) destiné à émettre la lumière dans différentes plages angulaires.

5. Procédé de détermination d'une distance et/ou d'une vitesse d'un objet au moyen d'un dispositif de détection selon l'une des revendications 1 à 4, ledit procédé comprenant les étapes suivantes :
- émettre de la lumière dans au moins une plage angulaire (10, 11) au moyen du module d'émission (2) à au moins une fréquence sur l'objet (6), la variation de la lumière étant effectuée sensiblement simultanément à des fréquences dans différentes plages de fréquences (20a, 20b, 20c, 20d) en fonction du temps à chaque fois par le biais du modulateur acousto-optique respectif,
- recevoir la lumière, réfléchie par l'objet (6), au moyen d'un module de réception (3),
- analyser la lumière reçue dans la plage de fréquences respective (20a, 20b, 20c, 20d) à au moins deux instants (21),
- déterminer la distance et/ou la vitesse de l'objet (6) sur la base de la lumière émise et des instants d'analyse (21) de la lumière reçue.

6. Procédé selon la revendication 5, les instants d'analyse (21) étant sélectionnés avec le même intervalle de temps.

7. Procédé selon l'une des revendications 5 ou 6, la détermination de la distance et/ou de la vitesse de l'objet (6) étant effectuée sur la base d'une transformation de Fourier bidimensionnelle et d'une estimation de fréquence.

8. Procédé selon la revendication 7, les instants d'analyse (21) étant sélectionnés avec un intervalle de temps non équidistant et/ou les intervalles de fréquence entre au moins deux plages de fréquences (20a, 20b, 20c, 20d) étant sélectionnés de manière différente et l'estimation de fréquence étant effectuée au moyen d'un procédé de détection compressé avec prise en compte de la composante fréquentielle liée à la distance dans une fréquence Doppler.
